# EUROPEAN PATENT APPLICATION

(11) **EP 4 786 029 A1**
(43) Date of publication of application: **05.08.2026**
(21) Application number: 26155601.3
(22) Date of filing: 31.01.2026
(51) Int. Cl.: B01D 46/79, B01D 29/62, B01D 33/44

(54) **VESSEL FOR TREATMENT AND CONDITIONING OF MEDIA**

(30) Priority: 03.02.2025 CZ 202542583 U
(71) Applicant: Posmourny, Petr, 468 27 Nová Ves nad Nisou (CZ)
(72) Inventor: Posmourny, Petr, 468 27 Nová Ves nad Nisou (CZ)
(74) Representative: Kolator, Kamil

(57) **Abstract**

The vessel is based on a component having at least one intake opening and through-slots implemented for the flow of a medium, for example directly in the walls of the component, wherein the number and shapes of the slots are arbitrary. An inner portion of the component is configured to receive a filter section comprising a filter filling or a subassembly. A lid is detachably or non-detachably connected to the plastic molded component. The filter filling or subassembly is fixed within the molded component either by its own casing or by means of a perforated screen and preferably a spring bearing against the lid and applying a constant pressure to the perforated screen in order to ensure passage of the medium from the slots between the lid and the screen. The molded component is provided in a lower portion thereof with an opening, preferably having an internal thread, for discharging the medium from the vessel into a functional system.

## Description

### Field of the Invention

The technical solution relates to the design of a vessel for the treatment and conditioning of respective media.

### Background of the Invention

A vessel for the treatment and conditioning of media may be, for example, a part of an air system, in particular of commercial vehicles. The main function of the vessel is the purification and drying of various media, primarily air, as well as the removal of solid particles and, in some cases, oils and other impurities that may occur in the environment in which the vessel is applied.

At present, the commonly used structural arrangement, especially for a filter vessel, is as follows:
The filtering or separating filling of the vessel (for example a molecular sieve), whose primary function is the separation and filtration of the flowing medium, is placed together with its own casing (e.g. made of plastic) and a perforated lid inside the filter vessel as a subassembly, and is either firmly fixed or continuously compressed by a spring. This subassembly is connected by a sealed mechanical joint to a metal flange with a centered opening, which is provided with a thread or another detachable connection used for connecting the entire vessel into a functional system. Subsequently, this flange is mechanically and non-detachably connected to a metal deep-drawn part that hermetically closes the entire vessel.

The disadvantage of this solution lies primarily in its complex construction, the resulting manufacturing complexity, and therefore also in its relatively high cost.

The vessel according to the prior art operates as follows:
The medium intended for treatment (for example filtration of mechanical impurities, separation of components such as water vapor from air, oil emulsions, etc.) is driven through openings in the bottom plate through an internal gap between the outer casing (metal deep-drawn part) and the internal subassembly. It then enters the filtering subassembly itself, where the medium is treated. Subsequently, the medium leaves the filter vessel through the central connection opening and continues into the system (for example into the air brake system of commercial vehicles).

The disadvantage of this device is again primarily its complex construction and thus higher cost.

### Summary of the Invention

The above-mentioned disadvantages are largely addressed by the design of a vessel for the treatment and conditioning of media according to the present technical solution. The basis of the solution is a component with at least one intake opening and with implemented through-slots for the flow of the medium, for example directly in the walls of the component, wherein the number and shapes of the slots may be arbitrary.

The inner part of the component is intended for accommodating a filter section with any filter filling or a subassembly for treatment and conditioning of the medium, wherein a lid is detachably or non-detachably connected to the plastic molded component. The filter filling or subassembly is fixed in the molded component either by its own casing or by means of a perforated screen and preferably a spring that bears against the lid and exerts constant pressure on the perforated screen so as to ensure the passage of the medium from the slots between the lid and the screen.

The molded component is provided in its lower part with an opening, preferably with an internal thread, which is intended for the outlet of the medium from the vessel into a functional system, wherein the bottom of the component is adapted to the requirements for connecting the vessel to existing or future systems with medium flow.

The medium intended for treatment passes through the intake openings and then through the slots that are an integral part of the component, through the filter section and back into the system in both possible directions, wherein one direction is the primary direction intended for filtration, purification or separation of the medium, and the opposite direction is intended for regeneration and extension of the service life of the filter filling and is used minimally.

### Brief Description of the Drawings

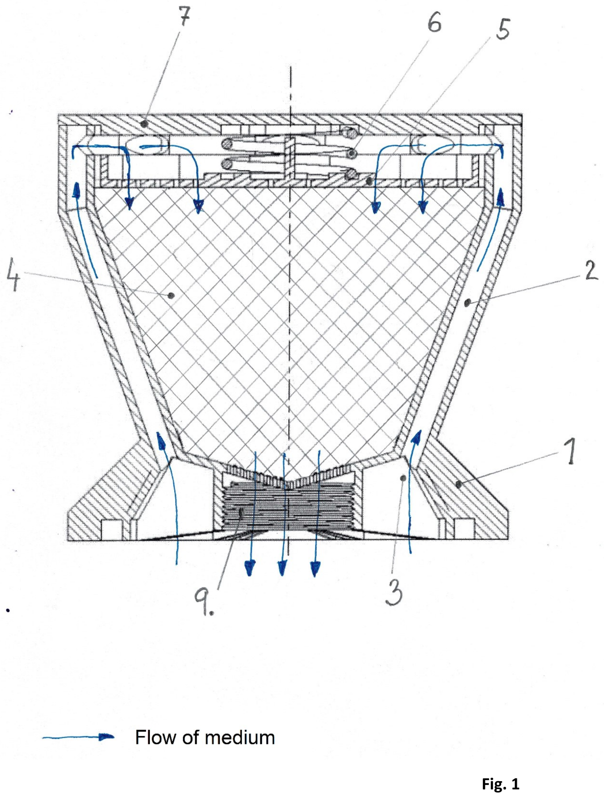

The technical solution will be explained in more detail by means of drawings, where Fig. 1 shows a sectional view of the vessel in an exemplary embodiment.

### Detailed Description of the Preferred Embodiment

Component 1 with eight intake openings 3 and eight implemented through-slots 2 intended for the flow of the medium are formed directly in the walls of component 1. The inner part 4 of component 1 is intended for accommodating the filter section with a filter filling, wherein lid 7 is detachably connected to the plastic component 1.

The filter filling is fixed in component 1 by means of a perforated screen 5 and a spring 6 which bears against lid 7 and exerts constant pressure on the perforated screen 5 so as to ensure the passage of the medium from the slots 2 between the lid 7 and the screen 5.

Component 1 is provided in its lower part with an opening 9 with an internal thread, which is intended for the outlet of the medium from the vessel into a functional system, wherein the bottom of component 1 is adapted to the requirements for connecting the vessel to existing or future systems with medium flow.

This exemplary embodiment does not limit the scope of protection and represents only one of the possible arrangements of a vessel for treatment and conditioning of a medium.

### Industrial Applicability

The technical solution is applicable in industrial sectors, in particular in the automotive industry.

## Claims

1. A vessel for treatment and conditioning of media, **characterized in that** it comprises a component (1) with at least one intake opening (3) and with at least one implemented through-slot (2) for the flow of a medium, wherein the inner part (4) of the component (1) is intended for accommodating a filter section with any filter filling or a subassembly for treatment and conditioning of media, wherein a lid (7) is detachably or non-detachably connected to the component (1), and the filter filling or subassembly for treatment and conditioning of media is fixed in the component (1) with ensured passage of the medium from the slots (2) between the lid (7) and the filter filling or subassembly, wherein the component (1) is provided in its lower part with an opening (9) intended for the outlet of the medium from the vessel into a functional system.

2. The filter vessel according to claim 1, **characterized in that** the filter filling or subassembly is fixed in the molded component (1) by means of a perforated screen (5) and a spring (6) which bears against the lid (7) and exerts constant pressure on the perforated screen (5) to ensure passage of the medium from the slots (2) between the lid (7) and the screen (5).

3. The filter vessel according to claim 1, **characterized in that** the opening (9) and the component (1) are connected by means of a detachable joint.
